# EUROPEAN PATENT APPLICATION

(11) **EP 4 763 896 A1**
(43) Date of publication of application: **24.06.2026**
(21) Application number: 25225148.3
(22) Date of filing: 18.12.2025
(51) Int. Cl.: C08J 9/00, C08J 9/08, D06N 3/00, D06N 3/06

(54) **POLYVINYL CHLORIDE FOAMING COMPOSITION AND POLYVINYL CHLORIDE ARTIFICIAL LEATHER**

(30) Priority: 20.12.2024 CN 202411896517
(71) Applicant: Benecke-Changshun Auto Trim (Zhangjiagang) Co., Ltd., Zhangjiagang, Jiangsu 215632 (CN)
(72) Inventor: ZHOU, Lancheng, Jingang Town, Zhangjiagang City, 215632 (CN); MA, Yao, Jingang Town, Zhangjiagang City, 215632 (CN); LIAN, Chengbo, Jingang Town, Zhangjiagang City, 215632 (CN)
(74) Representative: FARAGO Patentanwälte GmbH

(57) **Abstract**

The present invention discloses a polyvinyl chloride foaming composition for preparing polyvinyl chloride artificial leather. The polyvinyl chloride foaming composition comprises: a polyvinyl chloride resin, a plasticizer, and a modified inorganic chemical foaming agent, and based on a total weight of the polyvinyl chloride resin and the plasticizer being 100 parts by weight, the polyvinyl chloride foaming composition comprises 1.5-3.5 parts of the modified inorganic chemical foaming agent. The present invention further discloses a polyvinyl chloride artificial leather, which comprises a polyvinyl chloride foaming layer prepared from the above-mentioned polyvinyl chloride foaming composition. According to the present invention, by adjusting types and use amounts of foaming agents in the polyvinyl chloride foaming layer to improve performance of the polyvinyl chloride artificial leather, the prepared polyvinyl chloride artificial leather has advantages such as high softness, a low volatile organic compound (VOC) content, and excellent odour performance.

## Description

### Technical Field

The present invention relates to a polyvinyl chloride foaming composition and polyvinyl chloride artificial leather, which can be applied to fields such as automobiles and home decoration.

### Background

Polyvinyl chloride (hereinafter referred to as PVC) is a main raw material in development and production of artificial leather, and PVC artificial leather is an important component of automobile interiors (for example, automobile seat materials). With continuous upgrading and development of the PVC artificial leather industry, consumers have put forward higher requirements for odour performance and softness performance of the automobile interiors.

PVC artificial leather usually comprises a base fabric layer, a foaming layer, and a skin layer that are stacked in sequence, and a foaming agent is an important action substance in a PVC foaming layer. The foaming agent comprises a physical foaming agent and a chemical foaming agent. In order to improve the softness of a material, organic chemical foaming agents are often adopted for foaming in traditional PVC foaming layers. However, products obtained by an organic foaming method have higher volatile organic compound (hereinafter referred to as VOC) contents and poorer odour performance, and most organic chemical foaming agents are substances prohibited by the EU REACH regulations. Although the physical foaming agent has low price and less residue after foaming, under same conditions, products obtained by a physical foaming method are harder and difficult to meet demands of consumers and the market for the softness of the PVC artificial leather.

Therefore, there is an urgent need to develop a PVC artificial leather that not only can meet the demand of consumers for high softness, but also has a low VOC content and excellent odour performance.

### Summary

An objective of the present invention is to solve the problem that traditional polyvinyl chloride artificial leather cannot simultaneously meet demands of high softness, a low VOC content, and excellent odour performance. The present invention provides a polyvinyl chloride foaming composition and polyvinyl chloride artificial leather, which can develop the polyvinyl chloride artificial leather that can not only meet the demands of the low VOC content and excellent odour performance, but also achieve high softness.

To address the above-mentioned technical problem, an implementation of the present invention discloses a polyvinyl chloride foaming composition for preparing the polyvinyl chloride artificial leather. The polyvinyl chloride foaming composition comprises a polyvinyl chloride resin, a plasticizer, and a modified inorganic chemical foaming agent, and based on a total weight of the polyvinyl chloride resin and the plasticizer being 100 parts by weight, the polyvinyl chloride foaming composition comprises 1.5-3.5 parts of the modified inorganic chemical foaming agent.

By adopting the above-mentioned technical solution, the modified inorganic chemical foaming agent is adopted to replace traditional organic chemical foaming agents and physical foaming agents, which can not only decrease the amount of a harmful chemical generated during a foaming process, decrease the VOC content of the product, and improve the odour performance of the product, but also improve the softness of the product without changing the use amount of the plasticizer, so that the product has advantages such as high softness, the low VOC content, and excellent odour performance.

Meanwhile, the content of the foaming agent in the polyvinyl chloride composition is 1.5-3.5 parts by weight. When the content of the foaming agent is 1.5 parts by weight, the prepared polyvinyl chloride artificial leather has a lower VOC content and better odour performance; and when the content of the foaming agent is 3.5 parts by weight, the prepared polyvinyl chloride artificial leather has higher softness. Therefore, according to actual production and customer demands, the use amount of the foaming agent in the polyvinyl chloride composition may be adjusted between 1.5 and 3.5 parts by weight during processing to meet the demands of customers for higher softness or a lower VOC content and better odour performance of the polyvinyl chloride artificial leather.

In some implementations of the present application, based on the total weight of the polyvinyl chloride resin and the plasticizer being 100 parts by weight, the polyvinyl chloride foaming composition comprises 2.0-3.0 parts of the modified inorganic chemical foaming agent.

Optionally, based on the total weight of the polyvinyl chloride resin and the plasticizer being 100 parts by weight, the polyvinyl chloride composition further comprises 3-11 parts by weight of a colorant.

Optionally, based on the total weight of the polyvinyl chloride resin and the plasticizer being 100 parts by weight, the polyvinyl chloride composition further comprises 4 parts by weight of a flame retardant.

In some implementations of the present application, the modified inorganic chemical foaming agent comprises a carbonate and a modifier, and the modifier comprises at least one selected from a stearic acid, a stearate, an erucic acid, an erucic acid derivative, a citric acid, a citrate, and an oxidized polyethylene wax.

By adopting the above-mentioned technical solution, thickness and uniformity of a coating layer in the modified inorganic chemical foaming agent are optimized by changing the type of the modifier, thereby optimizing a decomposition temperature of the modified inorganic chemical foaming agent.

In some implementations of the present application, the carbonate is a bicarbonate.

In some implementations of the present application, the bicarbonate is an alkali metal bicarbonate. Preferably, the alkali metal bicarbonate is a sodium bicarbonate.

By adopting the above-mentioned technical solution and by selecting the cheap and readily available sodium bicarbonate as the inorganic chemical foaming agent, not only can a processing cost of a mass production process be decreased, but also the sodium bicarbonate, selected as the inorganic chemical foaming agent for foaming and having less residues after foaming and a simple chemical structure, has no impact on the structure and performance of the product.

In some implementations of the present application, based on the total weight of the modified inorganic chemical foaming agent being 100 parts by weight, the modified inorganic chemical foaming agent comprises 10-50 parts of the modifier.

In some implementations of the present application, when the modifier is the stearic acid, the modified inorganic chemical foaming agent comprises 30-45 parts of the stearic acid. Preferably, when the modifier is the stearic acid, the modified inorganic chemical foaming agent comprises 35-40 parts of the stearic acid.

In some implementations of the present application, when the modifier is the erucic acid, the modified inorganic chemical foaming agent comprises 40-45 parts of the erucic acid.

By adopting the above-mentioned technical solution, use amounts of the modifiers are accordingly optimized when different modifiers are selected, thereby enabling decomposition temperatures of the modified inorganic chemical foaming agents prepared by selecting different modifiers to be more matched with a foaming temperature of the polyvinyl chloride artificial leather.

In some implementations of the present application, the modified inorganic chemical foaming agent is prepared by a melt coating or solution coating method.

An implementation of the present invention further discloses a polyvinyl chloride artificial leather, which comprises a polyvinyl chloride foaming layer prepared from the polyvinyl chloride foaming composition according to any one of the above-mentioned embodiments.

By adopting the above-mentioned technical solution, foaming performance of the polyvinyl chloride foaming layer is improved by adjusting a formula of the polyvinyl chloride foaming composition and the use amounts of raw materials, thereby improving the softness, the VOC content, and odour performance of the polyvinyl chloride artificial leather, so that the material simultaneously has advantages such as high softness, the low VOC content, and excellent odour performance.

### Brief Description of the Drawings

FIG. 1 shows a structural schematic diagram of polyvinyl chloride artificial leather provided by the present application;
FIG. 2 shows decomposition temperatures of modified inorganic chemical foaming agents prepared under conditions of different types and different addition amounts of modifiers;
FIG. 3 shows VOC performance of polyvinyl chloride artificial leather prepared only under conditions of different types of foaming agents;
FIG. 4 shows TVOC concentrations of polyvinyl chloride artificial leather prepared only under conditions of different types of foaming agents;
FIG. 5 shows performance of polyvinyl chloride artificial leather prepared only under conditions of different types of foaming agents;
FIG. 6 shows VOC performance of polyvinyl chloride artificial leather prepared only in cases of different contents of modified inorganic chemical foaming agents;
FIG. 7 shows TVOC concentrations of polyvinyl chloride artificial leather prepared only in cases of different contents of modified inorganic chemical foaming agents; and
FIG. 8 shows performance of polyvinyl chloride artificial leather prepared only in cases of different contents of modified inorganic chemical foaming agents.

### Description of reference numerals:

1-base fabric layer; 2-bonding layer; 3-polyvinyl chloride foaming layer; 4-polyvinyl chloride dense layer; 5-surface treatment layer; 51-surface treatment base coat; 52-surface treatment top coat.

### Detailed Description

Implementations of the present invention are described below through specific embodiments, and those skilled in the art can easily understand other advantages and effects of the present invention from the contents disclosed in this specification. Although the present invention is described and introduced in conjunction with preferred embodiments, it does not mean that features of the present invention are limited to the implementations. On the contrary, the objective of introducing the present invention in conjunction with the implementations is to cover other possible options or modifications extended based on the claims of the present invention. To provide a deeper understanding of the present invention, the following description comprises many specific details. The present invention may also be implemented without these details. In addition, to avoid confusion or obscuration of key points of the present invention, some specific details are omitted in the description. It should be noted that the embodiments of the present invention and features in the embodiments may be combined with each other in the absence of conflict.

It should be noted that in this specification, similar reference numerals and letters represent similar items in the following drawings. Therefore, once an item is defined in one drawing, it does not require further definition or explanation in subsequent drawings.

Terms such as "first" and "second" are used solely for distinguishing descriptions and should not be understood as indicating or implying relative importance.

To make objectives, technical solutions, and advantages of the present invention clearer, the implementations of the present invention are described in further detail below in conjunction with the drawings.

A foaming agent is an important action substance in a polyvinyl chloride foaming layer 3. Selection of the type of the foaming agent has a significant impact on a foaming ratio, a cell structure, and dispersion performance of a product, etc. A sodium bicarbonate, as an environmentally friendly foaming agent, has an environmentally friendly decomposition product, a low price, wide sources, and a large gas emission volume, thus having a good application prospect. However, due to a lower decomposition temperature and a wider decomposition temperature range, an application of the sodium bicarbonate during processing of polyvinyl chloride artificial leather is limited. Therefore, in the present invention, the sodium bicarbonate is selected as the foaming agent and modified to increase the decomposition temperature of the sodium bicarbonate and narrow the temperature interval, so that the sodium bicarbonate is better matched with a foaming temperature (180°C-210°C) of the polyvinyl chloride artificial leather during the processing in the present invention.

The present invention is further described below in conjunction with preparative examples and comparative examples.

### Preparative Examples

### Preparative Example 1

A modified sodium bicarbonate composite particle applied to a polyvinyl chloride composition is prepared in this preparative example, with a specific method as follows:
weighing 20g of a stearic acid and 80g of a sodium bicarbonate, respectively, then, heating 20g of the stearic acid to a molten state, subsequently, adding 80g of the sodium bicarbonate into the stearic acid in the molten state, evenly stirring and mixing to obtain a crude reaction product, and after cooling to room temperature, evenly grinding and sieving the reaction product to obtain the modified sodium bicarbonate composite particle.

### Preparative Example 2

The modified sodium bicarbonate composite particle applied to the polyvinyl chloride composition is prepared in this preparative example. The differences between this preparative example and Preparative Example 1 are that in this preparative example, the mass of the stearic acid is 25g, and the mass of the sodium bicarbonate is 75g.

### Preparative Example 3

The modified sodium bicarbonate composite particle applied to the polyvinyl chloride composition is prepared in this preparative example. The differences between this preparative example and Preparative Example 1 are that in this preparative example, the mass of the stearic acid is 30g, and the mass of the sodium bicarbonate is 70g.

### Preparative Example 4

The modified sodium bicarbonate composite particle applied to the polyvinyl chloride composition is prepared in this preparative example. The differences between this preparative example and Preparative Example 1 are that in this preparative example, the mass of the stearic acid is 35g, and the mass of the sodium bicarbonate is 65g.

### Preparative Example 5

The modified sodium bicarbonate composite particle applied to the polyvinyl chloride composition is prepared in this preparative example. The differences between this preparative example and Preparative Example 1 are that in this preparative example, the mass of the stearic acid is 40g, and the mass of the sodium bicarbonate is 60g.

### Preparative Example 6

The modified sodium bicarbonate composite particle applied to the polyvinyl chloride composition is prepared in this preparative example. The differences between this preparative example and Preparative Example 1 are that in this preparative example, the mass of the stearic acid is 45g, and the mass of the sodium bicarbonate is 55g.

### Preparative Example 7

The modified sodium bicarbonate composite particle applied to the polyvinyl chloride composition is prepared in this preparative example, with a specific method as follows:
weighing 20g of an erucic acid and 80g of the sodium bicarbonate, respectively, then, heating 20g of the erucic acid to the molten state, subsequently, adding 80g of the sodium bicarbonate into the erucic acid in the molten state, and evenly stirring and mixing to obtain the crude reaction product, and after cooling to room temperature, evenly grinding and sieving the reaction product to obtain the modified sodium bicarbonate composite particle.

### Preparative Example 8

The modified sodium bicarbonate composite particle applied to the polyvinyl chloride composition is prepared in this preparative example. The differences between this preparative example and Preparative Example 7 are that in this preparative example, the mass of the erucic acid is 25g, and the mass of the sodium bicarbonate is 75g.

### Preparative Example 9

The modified sodium bicarbonate composite particle applied to the polyvinyl chloride composition is prepared in this preparative example. The differences between this preparative example and Preparative Example 7 are that in this preparative example, the mass of the erucic acid is 30g, and the mass of the sodium bicarbonate is 70g.

### Preparative Example 10

The modified sodium bicarbonate composite particle applied to the polyvinyl chloride composition is prepared in this preparative example. The differences between this preparative example and Preparative Example 7 are that in this preparative example, the mass of the erucic acid is 35g, and the mass of the sodium bicarbonate is 65g.

### Preparative Example 11

The modified sodium bicarbonate composite particle applied to the polyvinyl chloride composition is prepared in this preparative example. The differences between this preparative example and Preparative Example 7 are that in this preparative example, the mass of the erucic acid is 40g, and the mass of the sodium bicarbonate is 60g.

### Preparative Example 12

The modified sodium bicarbonate composite particle applied to the polyvinyl chloride composition is prepared in this preparative example. The differences between this preparative example and Preparative Example 7 are that in this preparative example, the mass of the erucic acid is 45g, and the mass of the sodium bicarbonate is 55g.

### Preparative Example 13

The modified sodium bicarbonate composite particle applied to the polyvinyl chloride composition is prepared in this preparative example, with a specific method as follows:
weighing 20g of a citric acid and 80g of the sodium bicarbonate, respectively, then, heating 20g of the citric acid to the molten state, subsequently, adding 80g of the sodium bicarbonate into the citric acid in the molten state, evenly stirring and mixing to obtain the crude reaction product, and after cooling to room temperature, evenly grinding and sieving the reaction product to obtain the modified sodium bicarbonate composite particle.

### Preparative Example 14

The modified sodium bicarbonate composite particle applied to the polyvinyl chloride composition is prepared in this preparative example. The differences between this preparative example and Preparative Example 13 are that in this preparative example, the mass of the citric acid is 25g, and the mass of the sodium bicarbonate is 75g.

### Preparative Example 15

The modified sodium bicarbonate composite particle applied to the polyvinyl chloride composition is prepared in this preparative example. The differences between this preparative example and Preparative Example 13 are that in this preparative example, the mass of the citric acid is 30g, and the mass of the sodium bicarbonate is 70g.

### Preparative Example 16

The modified sodium bicarbonate composite particle applied to the polyvinyl chloride composition is prepared in this preparative example. The differences between this preparative example and Preparative Example 13 are that in this preparative example, the mass of the citric acid is 35g, and the mass of the sodium bicarbonate is 65g.

### Preparative Example 17

The modified sodium bicarbonate composite particle applied to the polyvinyl chloride composition is prepared in this preparative example. The differences between this preparative example and Preparative Example 13 are that in this preparative example, the mass of the citric acid is 40g, and the mass of the sodium bicarbonate is 60g.

### Preparative Example 18

The modified sodium bicarbonate composite particle applied to the polyvinyl chloride composition is prepared in this preparative example. The differences between this preparative example and Preparative Example 13 are that in this preparative example, the mass of the citric acid is 45g, and the mass of the sodium bicarbonate is 55g.

### Comparative Example 1

100g of the sodium bicarbonate solid was selected as a comparative example.

**Table 1: Characterization Test Results of Various Preparative Examples and Comparative Examples**

| | Initial Decomposition Temperature (°C) | End Point Decomposition Temperature (°C) |
|---|---|---|
| Comparative Example 1 | 100.0 | 140.0 |
| Preparative Example 1 | 143.9 | 182.2 |
| Preparative Example 2 | 166.4 | 191.7 |
| Preparative Example 3 | 178.3 | 203.3 |
| Preparative Example 4 | 186.7 | 210.4 |
| Preparative Example 5 | 191.2 | 217.9 |
| Preparative Example 6 | 194.6 | 220.1 |
| Preparative Example 7 | 123.8 | 159.1 |
| Preparative Example 8 | 127.6 | 163.2 |
| Preparative Example 9 | 132.7 | 172.3 |
| Preparative Example 10 | 139.7 | 178.4 |
| Preparative Example 11 | 146.3 | 184.9 |
| Preparative Example 12 | 152.7 | 191.6 |
| Preparative Example 13 | 127.7 | 163.1 |
| Preparative Example 14 | 134.2 | 171.7 |
| Preparative Example 15 | 141.3 | 179.6 |
| Preparative Example 16 | 149.7 | 186.3 |
| Preparative Example 17 | 156.9 | 192.2 |
| Preparative Example 18 | 166.7 | 200.6 |

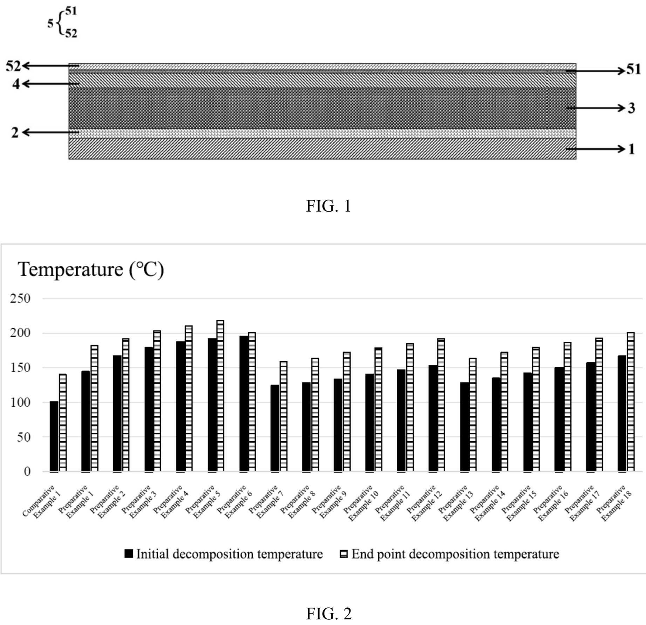

Referring to Table 1 and FIG. 2, by combining Preparative Examples 1-18 and Comparative Example 1, it can be seen that the decomposition temperature of the foaming agent is increased by modifying the sodium bicarbonate in the present application. In the present invention, in the case of the same addition amount of a modifier (taking 20 parts by weight of the modifier as an example), a modification effect of using the stearic acid as the modifier (with the initial decomposition temperature of 143.9°C and the end point decomposition temperature of 182.2°C) is better than a modification effect of using the erucic acid (with the initial decomposition temperature of 123.8°C and the end point decomposition temperature of 159.1°C) and the citric acid (with the initial decomposition temperature of 127.7°C and the end point decomposition temperature of 163.1°C) as the modifier; under the condition of using the stearic acid as the modifier, as the addition amount of the stearic acid in the modified foaming agent is constantly increased, the decomposition temperature of the modified foaming agent is also constantly increased. However, in order to be matched with a foaming temperature interval (180°C-210°C) adopted during an actual processing process, based on a weight of the modified foaming agent being 100 parts, the decomposition temperature and a decomposition temperature interval are more matched with the foaming temperature interval of the product in the present invention when the addition amount of the modifier is 30-45 parts. Preferably, when the addition amount of the modifier is 35-40 parts, the decomposition temperature and the decomposition temperature interval of the modifier are more matched with the foaming temperature interval of the product in the present invention.

The above-mentioned results indicate that in the present invention, by adjusting the types and contents of the modifier in the modified inorganic chemical foaming agent, the modifier can be better matched with the foaming temperature interval during the actual processing process.

The polyvinyl chloride artificial leather provided by the present invention is further described below in conjunction with embodiments and comparative examples. In the following embodiments, a polyvinyl chloride foaming layer of the polyvinyl chloride artificial leather adopts the stearic acid-modified sodium bicarbonate as the foaming agent, wherein based on a total weight of the modified sodium bicarbonate being 100 parts by weight, the addition amount of the stearic acid is 30 parts.

### Embodiments

### Embodiment 1

A polyvinyl chloride artificial leather is prepared in this embodiment, which comprises the following raw materials in parts by weight:
A formula of a polyvinyl chloride dense layer comprises, in parts by weight, 50 parts of a polyvinyl chloride resin, 50 parts of a plasticizer, and 6.5 parts of a stabilizer.

A formula of a polyvinyl chloride foaming layer comprises, in parts by weight, 50 parts of the polyvinyl chloride resin, 50 parts of the plasticizer, 1 part of the stabilizer, 4 parts of a flame retardant, and 1 part of a modified inorganic chemical foaming agent, wherein the modified inorganic chemical foaming agent is prepared in Preparative Example 3.

A formula of a bonding layer comprises, in parts by weight, 50 parts of the polyvinyl chloride resin, 50 parts of the plasticizer, and 1 part of the stabilizer.

A formula of a surface treatment base coat comprises, in parts by weight, 33.3 parts of water and a waterborne polyurethane resin containing 6.1 parts of a curing agent, wherein the waterborne polyurethane resin is purchased.

A formula of a surface treatment top coat comprises, in parts by weight, 33.3 parts of water, the waterborne polyurethane resin containing 6 parts of the curing agent, and 7.2 parts of an additive.

In the present invention, the polyvinyl chloride resin may be selected from, including but not limited to, polyvinyl chloride resins prepared by an emulsion method, a suspension method, a micro-suspension method, etc.

In the present invention, the plasticizer may be selected from, including but not limited to, phthalate plasticizers, trimellitate plasticizers, and aliphatic tribasic acid ester plasticizers.

In the present invention, the stabilizer may be selected from, including but not limited to, epoxy compound stabilizers, calcium-zinc stabilizers, phosphite stabilizers, and polyol stabilizers.

In the present invention, the flame retardant may be selected from, including but not limited to, halogen-based flame retardants, phosphorus and phosphorus compounds, metal hydrates, expanded graphite, boron compounds, antimony compounds, aluminum oxalate, and zinc sulfide-based flame retardants.

In the embodiments of the present invention, those without specific technologies or conditions are used in accordance with technologies or conditions described in documents in the art or in accordance with product instructions. Reagents or instruments used without manufacturers are all conventional products that can be purchased on the market.

In this embodiment, the polyvinyl chloride artificial leather is prepared according to the following steps:
Raw materials of the polyvinyl chloride dense layer, raw materials of the polyvinyl chloride foaming layer, and raw materials of the bonding layer were weighed according to the above-mentioned formulas and evenly mixed to obtain a polyvinyl chloride dense layer slurry, a polyvinyl chloride foaming layer slurry, and a bonding layer slurry, respectively. Raw materials of the surface treatment base coat and raw materials of the surface treatment top coat are weighed according to the above-mentioned formulas, evenly mixed, and then filtered to obtain a surface treatment base coat slurry and a surface treatment top coat slurry, respectively. On a polyvinyl chloride coating machine, the polyvinyl chloride dense layer slurry, the polyvinyl chloride foaming layer slurry, and the bonding layer slurry were sequentially coated onto a release paper and dried separately to obtain the polyvinyl chloride dense layer 4, the polyvinyl chloride foaming layer 3, and the bonding layer 2 (referring to FIG. 1). After cooling was performed, the release paper was peeled off from the materials to obtain a semi-finished polyvinyl chloride artificial leather product supported by a base fabric, and then the bonding layer 2 of the semi-finished polyvinyl chloride artificial leather product was bonded and attached to the base fabric. Subsequently, surface treatment was performed on the polyvinyl chloride artificial leather surface treatment machine, the surface treatment base coat slurry and the surface treatment top coat slurry were sequentially coated onto a surface of the polyvinyl chloride dense layer 4, drying was performed between each coating, and drying was also performed after the surface treatment was completed. Wherein, the bonding layer 2 was dried in an oven at a temperature of 180-210°C for a time of 60s.

### Embodiment 2

The difference between this embodiment and Embodiment 1 is that in this embodiment, the content of the modified inorganic chemical foaming agent is 1.5 parts.

### Embodiment 3

The difference between this embodiment and Embodiment 1 is that in this embodiment, the content of the modified inorganic chemical foaming agent is 2 parts.

### Embodiment 4

The difference between this embodiment and Embodiment 1 is that in this embodiment, the content of the modified inorganic chemical foaming agent is 2.5 parts.

### Embodiment 5

The difference between this embodiment and Embodiment 1 is that in this embodiment, the content of the modified inorganic chemical foaming agent is 3 parts.

### Embodiment 6

The difference between this embodiment and Embodiment 1 is that in this embodiment, the content of the modified inorganic chemical foaming agent is 3.5 parts.

### Embodiment 7

The difference between this embodiment and Embodiment 1 is that in this embodiment, the content of the modified inorganic chemical foaming agent is 4 parts.

### Comparative Example 1

The difference between this comparative embodiment and Embodiment 1 is that in this embodiment, the foaming agent used is an organic chemical foaming agent with a content of 3 parts.

### Comparative Example 2

The difference between this comparative embodiment and Embodiment 1 is that in this embodiment, the foaming agent used is a physical foaming agent with a content of 3 parts.

**Table 2: Impacts of Types of Foaming Agents on Performance of Polyvinyl Chloride Artificial Leather**

| | Embodiment 5 | Comparative Example 1 | Comparative Example 2 |
|---|---|---|---|
| Foaming ratio | 3.44 | 3.61 | 2.67 |
| VOC content (µg/m³) | | | |
| Benzene (µg/m³) | 10 | 34 | 18 |
| Toluene (µg/m³) | 23 | 61 | 43 |
| Ethylbenzene (µg/m³) | 27 | 57 | 35 |
| Xylene (µg/m³) | 31 | 49 | 30 |
| Styrene (µg/m³) | N.D | 17 | N.D |
| Formaldehyde (µg/m³) | 17 | 53 | 31 |
| Acetaldehyde (µg/m³) | 28 | 46 | 27 |
| Acrolein (µg/m³) | 19 | 37 | 22 |
| TVOC (µg/m³) | 2769 | 10036 | 3762 |
| Odour performance | 4.0 | 5.0 | 4.0 |
| Softness performance | 5.2 | 5.3 | 4.0 |

Wherein, a calculation formula of the foaming ratio is: (thickness of the foaming layer of a finished product/actual gram weight per unit area) * empirical value. Wherein, the empirical value is in a range of 1000-3000.

A VOC content is tested according to a 10L bag method, and a higher rating indicates worse environmental protection performance of a sample and higher harm to living organisms.

Odour performance is obtained by testing odour of a sample at 200cm² according to the PV3900 standard, and a lower rating indicates better odour.

Softness performance is tested according to the GWT A L50-01: 2019-12 4.8 standard, and a higher rating indicates better softness of a sample.

It should be pointed out that when the physical foaming agent is selected for foaming, since some short-chain alkanes remain on a surface of the product during production, when the VOC content is tested, these short-chain alkanes are detected in the VOC content, resulting in a higher VOC content.

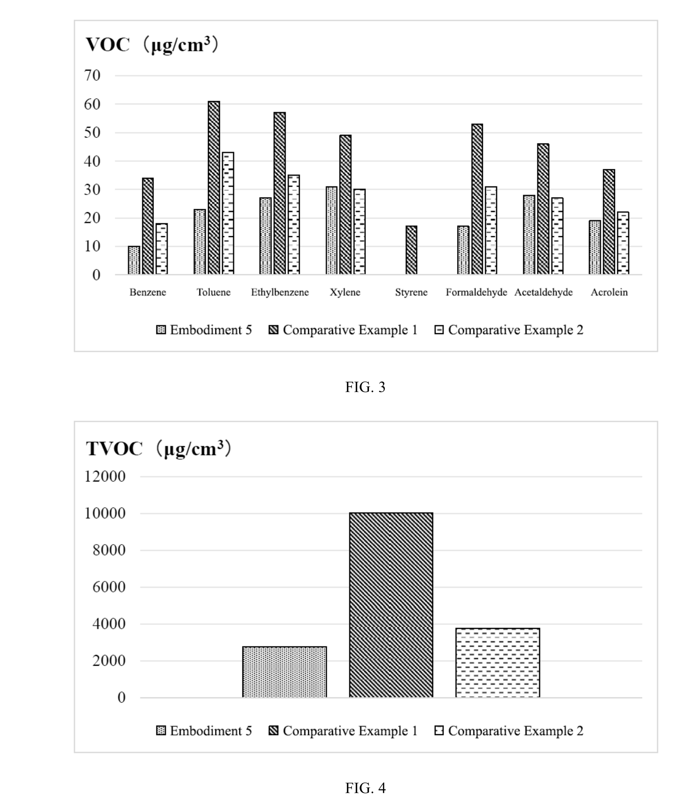

Referring to Table 2, FIG. 3, FIG. 4, and FIG. 5, it can be seen that in the case of the same addition amount of the foaming agent (taking 3 parts by weight of the foaming agent as an example), compared with the traditional physical foaming agent and the organic chemical foaming agent, the polyvinyl chloride artificial leather prepared by adopting the modified inorganic chemical foaming agent for foaming has superior softness, a lower VOC content, and superior odour performance. In the present invention, by combining Embodiment 5 and Comparative Example 2, it can be seen that the polyvinyl chloride artificial leather prepared by adopting the modified inorganic chemical foaming agent for foaming has better overall performance than the polyvinyl chloride artificial leather prepared by adopting the physical foaming agent. By combining Embodiment 5 and Comparative Example 1, it can be seen that although the foaming ratio and softness performance of the polyvinyl chloride artificial leather prepared by adopting the modified inorganic chemical foaming agent are slightly inferior to those of the polyvinyl chloride artificial leather prepared with the same addition amount of the organic chemical foaming agent, the odour performance and VOC content of the polyvinyl chloride artificial leather prepared in Embodiment 5 are far superior to those of the polyvinyl chloride artificial leather prepared in Comparative Embodiment 1. In the case of similar softness and foaming ratio, the polyvinyl chloride artificial leather prepared by adopting the modified inorganic chemical foaming agent for foaming can better meet the demands of consumers and the market for non-toxic and environmentally friendly products.

The above-mentioned results indicate that the modified inorganic chemical foaming agent selected in the present invention to replace the traditional organic chemical foaming agent and the physical foaming agent can significantly improve the odour performance of the polyvinyl chloride artificial leather and decrease the VOC content of the polyvinyl chloride artificial leather while maintaining high softness performance, thereby obtaining the polyvinyl chloride artificial leather with high softness, a low VOC content, and excellent odour performance.

**Table 3: Impacts of Addition Amounts of Modified Inorganic Chemical Foaming Agents on Performance of Polyvinyl Chloride Artificial Leather**

| | Embodiment 1 | Embodiment 2 | Embodiment 3 | Embodiment 4 | Embodiment 5 | Embodiment 6 | Embodiment 7 |
|---|---|---|---|---|---|---|---|
| Foaming ratio | 1.43 | 1.77 | 2.02 | 2.86 | 3.44 | 4.01 | 4.74 |
| VOC content (µg/m³) | | | | | | | |
| Benzene (µg/m³) | - | - | - | - | 10 | 12 | 17 |
| Toluene (µg/m³) | - | - | - | - | 23 | 29 | 36 |
| Ethylbenzene (µg/m³) | - | - | - | - | 27 | 22 | 24 |
| Xylene (µg/m³) | - | - | - | - | 31 | 30 | 36 |
| Styrene (µg/m³) | - | - | - | - | N.D | N.D | N.D |
| Formaldehyde (µg/m³) | - | - | - | - | 17 | 21 | 27 |
| Acetaldehyde (µg/m³) | - | - | - | - | 28 | 23 | 16 |
| Acrolein (µg/m³) | - | - | - | - | 19 | 16 | 12 |
| TVOC (µg/m³) | - | - | - | - | 2769 | 3193 | 3381 |
| Odour performance | 3.0 | 3.5 | 3.5 | 3.5 | 4.0 | 4.5 | - |
| Softness performance | 3.9 | 4.2 | 4.6 | 4.8 | 5.2 | 5.6 | - |

Wherein, N.D (Not Detected) indicates "not detected".

The VOC content of a product prepared by adopting a chemical foaming agent for foaming is usually decreased with an increase in an addition amount of the foaming agent. Therefore, in the present invention, VOC performance and TVOC concentrations are shown only at high addition amounts of foaming agents.

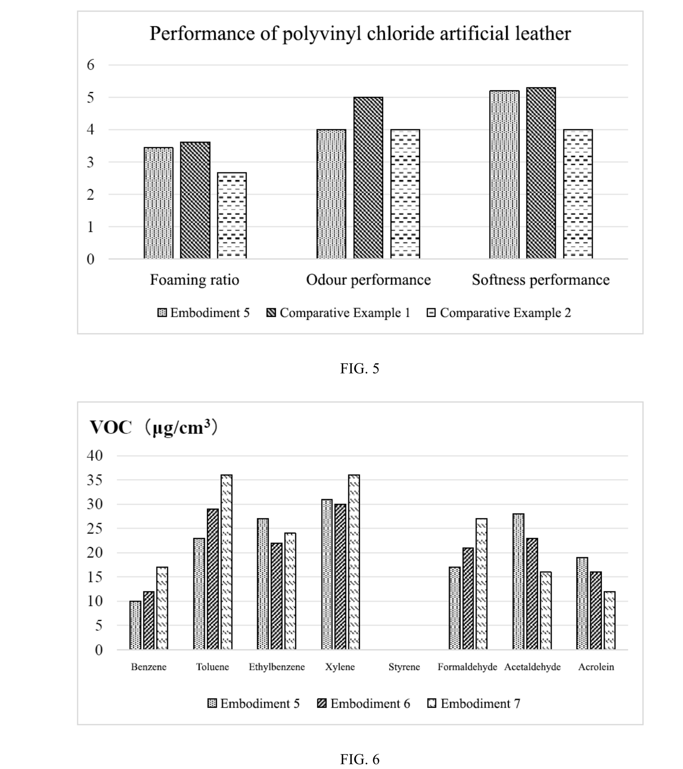

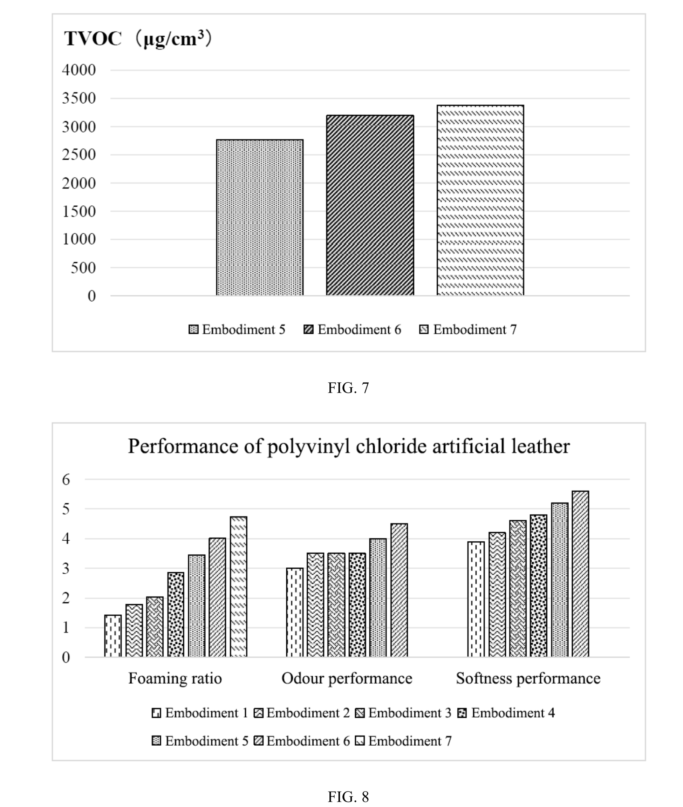

Referring to Table 3, FIG. 6, FIG. 7, and FIG. 8, by combining Embodiments 1-7, it can be seen that in the case of adopting the modified inorganic chemical foaming agent prepared in Preparative Example 3 as the foaming agent, when the addition amount of the foaming agent is higher, the polyvinyl chloride artificial leather has a higher foaming ratio and better softness. However, this process is also accompanied by a gradual increase in the VOC content and worse odour performance. When the content of the modified inorganic chemical foaming agent in the polyvinyl chloride foaming layer is 2.0-3.0 parts, the prepared polyvinyl chloride artificial leather has high softness, a low VOC content, and excellent odour performance.

The above-mentioned results indicate that in the present invention, by adjusting the content of the modified inorganic chemical foaming agent in the polyvinyl chloride foaming composition of the polyvinyl chloride artificial leather, comprehensive demands of consumers and the market for high softness, a low VOC content, and excellent odour performance of the polyvinyl chloride artificial leather can be better met.

In some embodiments, a surface of the polyvinyl chloride artificial leather can be embossed according to actual demands to obtain polyvinyl chloride artificial leather with different appearance patterns and hand feels.

In some embodiments, a finished product of the polyvinyl chloride artificial leather can be cut according to actual demands.

Although the present invention has been illustrated and described with reference to certain preferred implementations of the present invention, it should be understood by those of ordinary skill in the art that the above-mentioned content is a further detailed description of the present invention in conjunction with specific implementations, and it cannot be determined that the specific implementations of the present invention are only limited to these descriptions. Those skilled in the art may make various changes in form and details, comprising making several simple deductions or substitutions, without departing from the spirit and scope of the present invention.

## Claims

1. A polyvinyl chloride foaming composition for preparing polyvinyl chloride artificial leather, **characterized in that** the polyvinyl chloride foaming composition comprises: a polyvinyl chloride resin, a plasticizer, and a modified inorganic chemical foaming agent, and based on a total weight of the polyvinyl chloride resin and the plasticizer being 100 parts by weight, the polyvinyl chloride foaming composition comprises 1.5-3.5 parts of the modified inorganic chemical foaming agent.

2. The polyvinyl chloride foaming composition according to claim 1, **characterized in that** based on the total weight of the polyvinyl chloride resin and the plasticizer being 100 parts by weight, the polyvinyl chloride foaming composition comprises 2.0-3.0 parts of the modified inorganic chemical foaming agent.

3. The polyvinyl chloride foaming composition according to claim 1, **characterized in that** the modified inorganic chemical foaming agent comprises a carbonate and a modifier, and the modifier comprises at least one selected from a stearic acid, a stearate, an erucic acid, an erucic acid derivative, a citric acid, a citrate, and an oxidized polyethylene wax.

4. The polyvinyl chloride foaming composition according to claim 3, **characterized in that** the carbonate is a bicarbonate.

5. The polyvinyl chloride foaming composition according to claim 4, **characterized in that** the bicarbonate is an alkali metal bicarbonate.

6. The polyvinyl chloride foaming composition according to claim 3, **characterized in that** based on a total weight of the modified inorganic chemical foaming agent being 100 parts by weight, the modified inorganic chemical foaming agent comprises 10-50 parts of the modifier.

7. The polyvinyl chloride foaming composition according to claim 6, **characterized in that** when the modifier is the stearic acid, the modified inorganic chemical foaming agent comprises 30-45 parts of the stearic acid.

8. The polyvinyl chloride foaming composition according to claim 6, **characterized in that** when the modifier is the erucic acid, the modified inorganic chemical foaming agent comprises 40-45 parts of the erucic acid.

9. The polyvinyl chloride foaming composition according to claim 6, **characterized in that** the modified inorganic chemical foaming agent is prepared by a melt coating or solution coating method.

10. A polyvinyl chloride artificial leather, **characterized in that** the polyvinyl chloride artificial leather comprises a polyvinyl chloride foaming layer prepared from the polyvinyl chloride foaming composition according to any one of claims 1 to 9.
